# EUROPEAN PATENT APPLICATION

(11) **EP 3 964 057 A1**
(43) Date of publication of application: **09.03.2022**
(21) Application number: 20918137.9
(22) Date of filing: 14.02.2020
(51) Int. Cl.: A01K 85/00

(54) **SCHOOLING MINNOW**

(71) Applicant: Palms Co., Ltd., Yaizu-shi Shizuoka 425-0066 (JP)
(72) Inventor: IIDA, Shigehiro, Hiratsuka-shi, Kanagawa 254-0911 (JP)
(74) Representative: Klunker IP Patentanwälte PartG mbB
(86) International application number: PCT/JP2020/005774
(87) International publication number: WO 2021/161507

(57) **Abstract**

The technical problem of the present invention is to develop a minnow type lure whose target fish is mainly trout and which provides the same movement as that of small fish to attract the target fish to bite, and the lure is a new school of fish minnow capable of attracting the target fish by providing a different underwater action from that of existing minnows and presenting the appearance of a school of small fish.

The lure attracting the target fish to prey on it that comprises a body resembling the shape of a small fish and provided with a line eye 3 for connecting a line L, a hook eye 4 and a hook H connected to the hook eye 4, and provides the body 2 with the same movement as that of small fish in water when the line L connected to the line eye 3 is pulled,
wherein the body 2 provided with the line eye 3 is a main body 21, and a sub-body 22 resembling the shape of a fish smaller than the main body 21 is attached to the main body.

## Description

### Technical Field

The present invention relates to a school of fish minnow which comprises a main body resembling the shape of a small fish and a sub-body resembling the shape of a fish smaller than the main body and attached to the main body.

### Background Art

It is known that at spots visited by a number of lure fishing anglers, target fish get used to lures and don't easily bite the lures and are in a what is called not fooled state.

For this reason, manufacturers have been making daily efforts to develop new lures that provide different movements from those of existing lures to attract the fish in a not fooled state to bite.

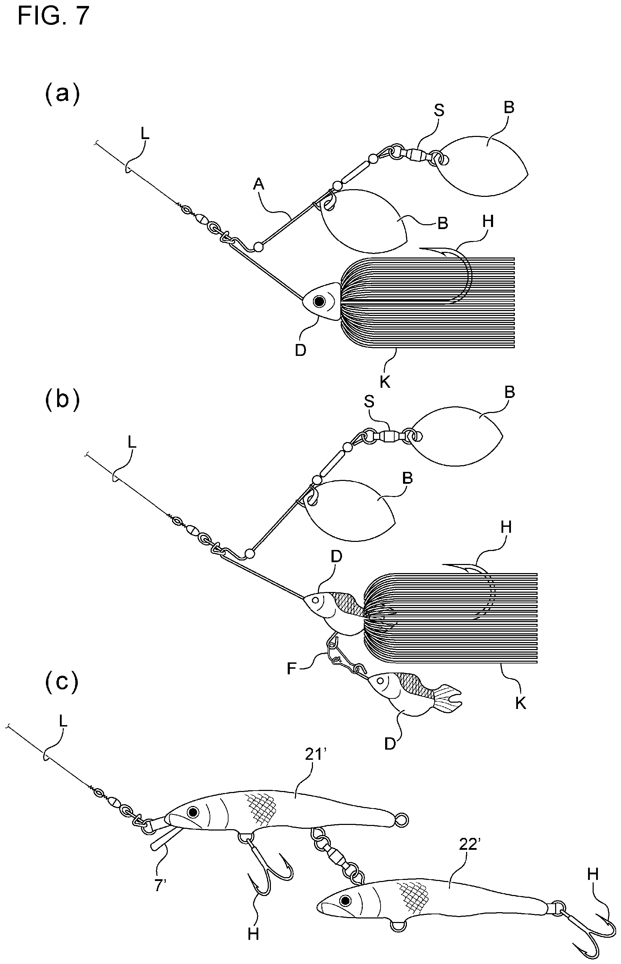

One of such lures which is now considered to be a classic lure is a spinner bait. The spinner bait comprises a head D that resembles the head of a small fish and is provided with a hook H and a skirt K, as shown in FIG. 7 (a). This head D is connected to a line L which is also connected to an arm A that is provided with a rotary blade B. The head D and the rotary blade B present the appearance of a school of small swimming fish.

However, inevitably and eventually, the target fish becomes used to the spinner bait described above, and further improvements have been attempted (See, for example, Patent Literature 1).

With regard to the lure disclosed in Patent Literature 1, as shown in FIG. 7(b), the head D of the spinner bait resembles the shape of a small fish, and a second head D hangs from the head D via a connecting metal fitting F and the lure presents the appearance of a larger school of small swimming fish.

Incidentally, the spinner bait as described above is different from a minnow which provides the same movement as that of small fish to attract them to bite as described below. The flashing effects and noise produced mainly by the glittering rotating blade D entice them into biting the spinner bait.

Furthermore, the first head D and the second head D move independently from each other, and the heads connected by a swivel (twisting swivel) S, in particular, is considered to have a sufficient degree of freedom of mutual movement.

Additionally, as shown in FIG. 7 (c), Patent Literature 1 discloses a minnow type lure which comprises a first body 21' and a second body 22' which has substantially the same shape as the first body 21' and is hung from the first body 21' via the swivel S (See Patent Literature 1, FIG. 15).

As described in [Technical Problem], these lures disclosed in Cited Literature 1 have a primary object to improve the catch of fish living at the bottom of the water. The lures are configured to secure the weight and be able to be quickly submerged deep in the water, not by enlarging the first head, but by comprising the second head.

Though the spinner baits are suitable for black bass and the like, it is not suitable for fishing trout.

By the way, mainly in terms of buoyancy, the lures used for lure fishing are classified into HF (high float), F (floating), and SF (slow floating) in the order of buoyancy highest to lowest. Furthermore, the intermediate type lures are classified into SP (suspend) and those which need less buoyancy, such as SS (slow sinking), S (sinking), FS (fast sinking), and (ES (extra sinking)).

### Citation List

### Patent Literature

Patent Literature 1: Japanese Patent No. 3892357

### Summary of Invention

### Technical Problem

The present invention has been made in consideration of such background. Its technical problem is to develop a minnow type lure whose main target fish is trout and which provides the same movement as that of small fish to attract the target fish to bite, and this new school of fish minnow presents the appearance of a school of small fish and provides different underwater actions from those of existing minnows to entice the target fish.

### Solution to Problem

More specifically, the school of fish minnow according to claim 1 is characterized in being a lure that comprises a body resembling the shape of a small fish and provided with a line eye for connecting a line, a hook eye and a hook connected to the hook eye, and provides the body with the same movement as that of small fish in water to attract target fish to prey on it when the line connected to the line eye is pulled, wherein the body provided with the line eye is a main body, and a sub-body resembling the shape of a fish smaller than the main body is attached to the main body.

Furthermore, in addition to the element described earlier, the school of fish minnow according to claim 2 is characterized in that the structure of attaching the sub-body to the main body moderately restricts the movement of the sub-body, and is configured such that the movement of the sub-body causes the movement of the main body to change when the line is pulled.

Furthermore, in addition to the elements described earlier, the school of fish minnow according to claim 3 is characterized in that the main body is of a floating type.

Furthermore, in addition to the elements according to either claim 1 or 2, the school of fish minnow according to claim 4 is characterized in that the main body is of a suspend type or a sinking type.

Furthermore, in addition to the elements according to either claim 3 or 4, the school of fish minnow according to 5 is characterized in that the sub-body is attached to the dorsal side of the main body and is of a floating type.

Furthermore, in addition to the elements according to either claim 3 or 4, the school of fish minnow according to claim 6 is characterized in that the sub-body is attached to the ventral side of the main body and is of a suspend type or a sinking type.

Furthermore, in addition to the elements described earlier, the school of fish minnow according to claim 7 is characterized in that the weight ratio of the main body to the sub-body is 3 to 8: 1.

The configuration of the invention recited in each of these claims is used as a means to solve the above-mentioned problems.

### Advantage Effects of Invention

First of all, the invention according to claim 1 is configured such that the main body and the sub-body attached to the main body can present the appearance of a school of small fish.

Furthermore, the invention according to claim 2 is configured such that the yawing motion of the sub-body, in particular, is transmitted to the main body and can provide the movement of the main body with changes different from before.

Furthermore, the invention according to claim 3 makes it possible to present an appearance in which the floating type main body swims together with the sub-body.

Furthermore, the invention according to claim 4 makes it possible to present an appearance in which the suspend type or sinking type main body swims together with the sub-body.

Furthermore, since the invention according to claim 5 comprises the sub-body which is attached to the dorsal side of the main body and is of a floating type, it can avoid careless interference with the main body and present the natural appearance of a school of small fish.

Furthermore, since the invention according to claim 6 comprises the sub-body which is attached to the ventral side of the main body and is of a suspend type or a sinking type, it can avoid careless interference with the main body and present a natural appearance of a school of small fish.

Furthermore, the invention according to claim 7 is configured such that the movement of the main body is the primary movement of the school of fish minnow and it can link the movement of the sub-body to the movement of the main body.

### Brief Description of Drawings

[FIG. 1] FIG. 1 is a perspective view which shows the school of fish minnow according to the present invention.
[FIG. 2] FIG. 2 is a top side view and a partially enlarged perspective view.
[FIG. 3] FIG. 3(a) is a side view which shows a pitching range of the sub-body. FIG. 3(b) is a front view which shows a rolling range. FIG. 3(c) is a plan view which shows a yawing range.
[FIG. 4] FIGS. 4(a)(b) are side views which show an example in which the main body is of a floating type, and FIG. 4(c) is a side view which shows an example in which the main body is of a suspend type or a sinking type.
[FIG. 5] FIG. 5 is a plan view which shows the step-by-step twitching-based movement of the school of fish minnow.
[FIG. 6] FIG. 6 is a plane view which shows the step-by-step twitching-based movement of the school of fish minnow.
[FIG. 7] FIG. 7(a) is a side view which shows an existing spinner bait, and FIGS. 7(b) and 7(c) are side views which show the lures disclosed in Patent Document 1.

### Description of Embodiments

The best mode of the school of fish minnow according to the present invention will be described below by referring to the illustrated examples, but it is also possible to appropriately modify the examples within the scope of the technical idea of the present invention.

### Examples

In the drawings, reference numeral 1 indicates the school of fish minnow according to the present invention, which comprises a body 2 resembling a small fish and is provided with a line eye 3 for connecting a line L, a hook eye 4, and a hook H connected thereto. When an angler pulls the line L connected to the line eye 3, the school of fish minnow 1 provides the body 2 with the same motion as that of small fish in water to attract target fish (mainly trout) to bite (prey on the minnow).

Now the body 2 will be described in detail. The body 2 includes a main body 21 and a sub-body 22, and the body 2 having the line eye 3 is the main body 21 and a sub-body 22 resembling the shape of fish smaller than the main body 21 is attached to the main body 21.

The structure of attaching the sub-body 22 to the main body 21 moderately restricts the movement of the sub-body 22, and is configured such that when the line L is pulled, the movement of the sub-body 22 changes the movement of the main body 21.

Now, moderately restricting the movement of the sub-body 22 means restricting the movable range of the sub-body 22, and in this example, by way of an example, the yawing range of the sub-body 22 is restricted.

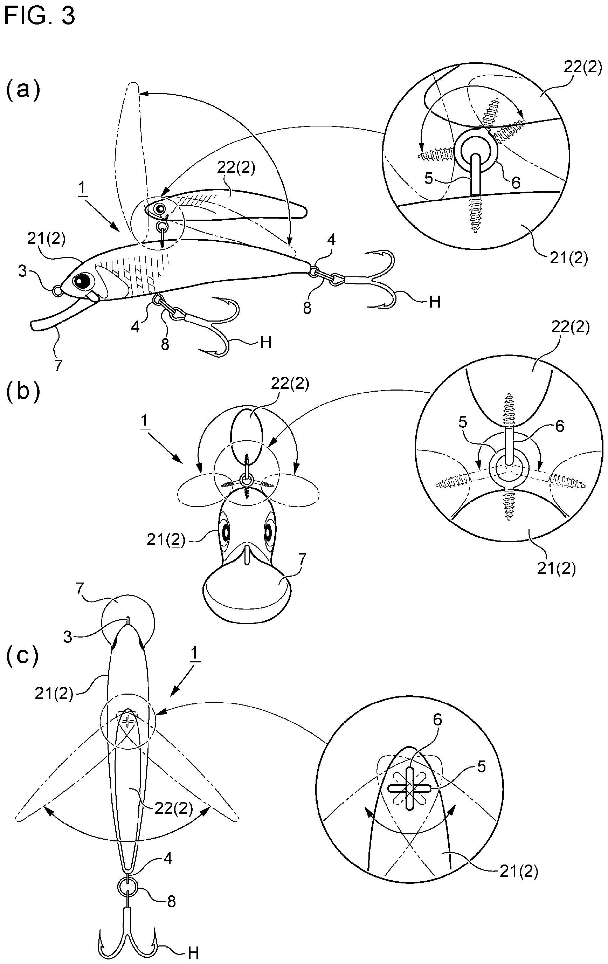

Specifically, as enlarged and shown in FIG. 3, a connecting eye 5 and a connecting eye 6 each of which has a chained annular portion are attached to the main body 21 and the sub-body 22, respectively, and thereby the sub-body 22 is attached to the main body 21.

When this attachment structure is adopted, as shown in FIG. 3(a), the pitching range of the sub-body 22 is restricted within a fixed range by the sub-body 22 which comes into contact with the main body 21 and it is not restricted by the structure of attaching the sub-body 22 to the main body 21.

Similarly, as shown in FIG. 3(b), the rolling range of the sub-body 22 is restricted within a fixed range by the sub-body 22 which comes into contact with the main body 21, and it is not restricted by the structure of attaching the sub-body 22 to the main body 21.

On the other hand, as shown in FIG. 3(c), within the yawing range of the sub-body 22, the sub-body 22 does not come into contact with the main body 21 and the yawing range (rotation range) of the sub-body 22 is restricted by the structure of attaching the sub-body 22 to the main body 21.

The weight ratio of the main body 21 to the sub-body 22 is 3 to 8: 1, preferably 4 to 7: 1, and more preferably 5 to 6: 1.

A proper value of this weight ratio is determined based on the mass of the hook H and the buoyancy of the main body 21 and the sub-body 22, which will be described later.

Furthermore, the length of the sub-body 22 is set so that when the sub-body 22 is attached to the main body 21, within the movable range of the sub-body 22 it may not interfere with the hook H which is connected to the hook eye 4 with an interposed split ring 8.

The school of fish minnow 1 according to the present invention according to the present invention has the basic configuration as described above, and examples whose configuration of parts other than the basic configuration is different will be described below.

### [Example in which the main body is of a floating type]

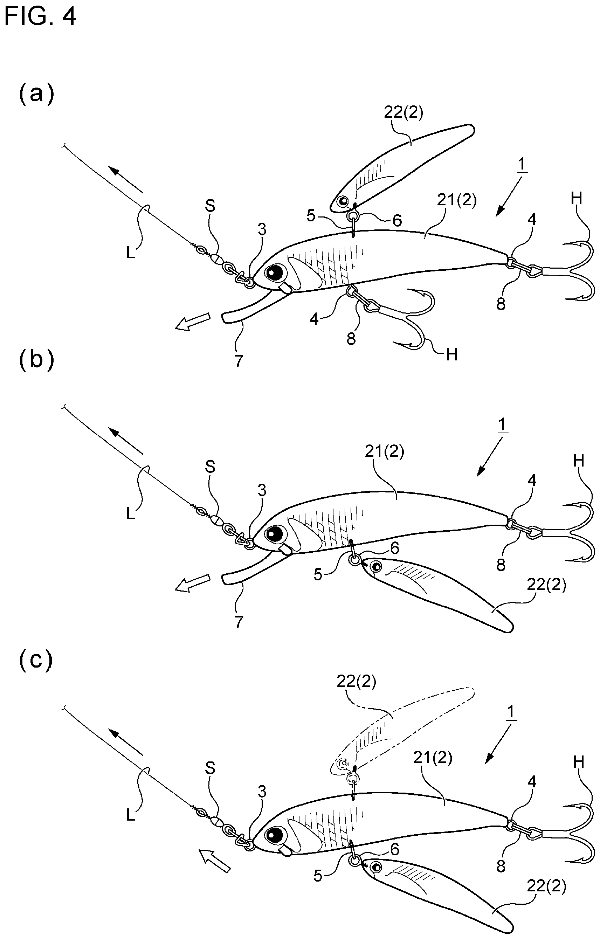

First, an example in which the main body 21 is of a floating type (having buoyancy) as shown in FIGS. 4(a) and 4(b) is described.

FIG. 4(a) illustrates the example in which the sub-body 22 is attached to the dorsal side of the main body 21 and is of a floating type.

Furthermore, in this example, the main body 21 is provided with 7 in the lower part of the chin.

The school of fish minnow 1 having this configuration is configured such that when the line L is pulled, the main body 21 is submerged by the action of the lip 7. The floating type sub-body 22 is in a forward leaning posture then and wobbles without interfering with the main body 21.

On the other hand, FIG. 4(b) illustrates an example in which the sub-body 22 is attached to the ventral side of the main body 21 and is of a suspend type or a sinking type (having no buoyancy).

In this example as well, the main body 21 is provided with the lip 7.

The school of fish minnow 1 with this configuration is configured such that when the line L is pulled, the main body 21 will be submerged by the action of the lip 7. The suspend type sub-body 22 is in a horizontal posture and the sinking type sub-body 22 is in a backward leaning posture then and wobbles without interfering with the main body 21.

### [Example in which the main body is of a suspend type or a sinking type]

Next, an example in which the main body 21 is of a suspend type or a sinking type as shown in FIG. 4(c) is described.

In this embodiment, when the sub-body 22 is attached to the ventral side of the main body 21, the sub-body 22 is of a suspend type or a sinking type.

The school of fish minnow 1 with the configuration is configured such that when the line L is pulled, the main body 21 advances while it is slightly rising. Since the suspend type sub-body 22 is in a horizontal posture and the sinking type sub-body 22 is in a backward leaning posture then, the sub-body 22 wobbles without interfering with the main body 21.

Even if the main body 21 is of a suspend type or a sinking type, the sub-body 22 can be attached to the dorsal side of the main body 21 as shown by a virtual line in FIG. 4(c) and in this case, the sub-body 22 is of a floating type.

As shown in the plurality of examples described above, the school of fish minnow 1 according to the present invention is configured such that the main body 21 and the sub-body 22 accompanied by and swimming with the main body 21 can present the appearance of a school of small fish. Moreover, the structure of attaching the sub-body 22 to the main body 21 moderately restricts the movement of the sub-body 22, and when the line L is pulled, the yawing motion of the sub-body 22 which exceeds the fixed range is transmitted to the main body 21, and thereby it can give the movement of the main body 21 changes different from before.

The appearance of the school of fish presented by the school of fish minnow 1 according to the present invention can attract even experienced target fish to bite and provide better fishing results.

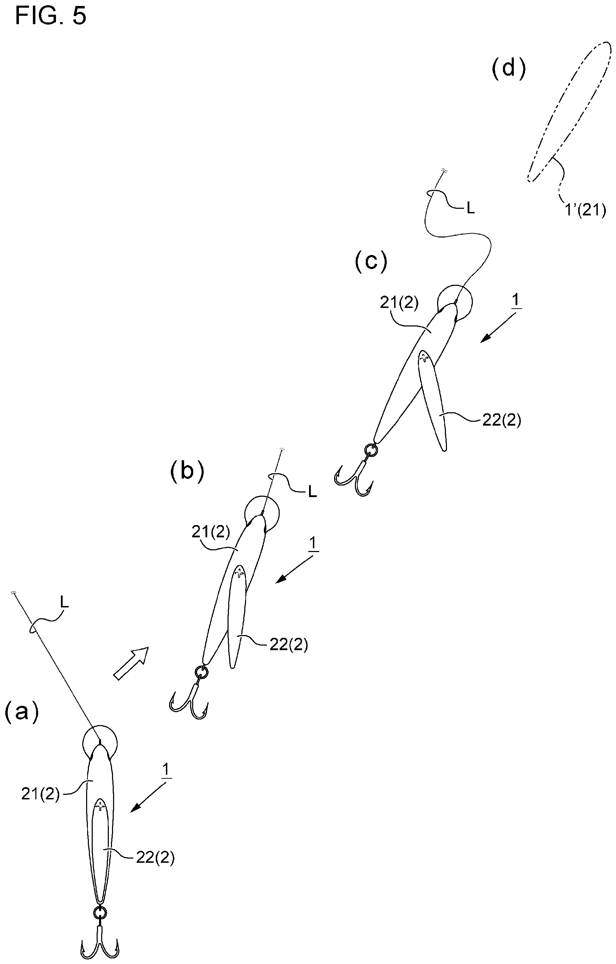

Furthermore, another characteristic movement of the school of fish minnow 1 according to the present invention is described. By way of an example, if an angler imparts a twitching action (an action that moves a lure by jerking a rod suddenly and sharply) from a state shown in FIG. 5(a), the main body 21 suddenly changes its direction and advances as if it flows in a direction in which the line L is pulled, further by the inertial force.

On the other hand, since the sub-body 22 tries to remain in the location because of the law of inertia, it is tilted toward the side of the right half of the main body 21, as shown in FIG. 5(b).

As the main body 21 further advances, the sub-body 22 soon reaches the limiting point of the yawing range as shown in FIG. 5(c).

As a result, the sub-body 22 receives water flows and functions as a brake, and the main body 21 stops advancing.

In the case of the existing minnow 1' which does not have the sub-body 22 or the minnow comprising only the main body 21, it moves to a point shown in FIG. 5(d) as if it flows.

As described above, in the case of the school of fish minnow 1 according to the present invention allows a distance to be pulled toward the side of the angler by one twitching action to be shorter than that of the existing minnow 1' and therefore, more twitching actions can be achieved by one cast and the school of fish minnow 1 can increase the chances of attracting the target fish and provide better fishing results.

### [Other Examples]

The present invention is based on the above-described examples, but the following modified modes can be adopted within the scope of the technical idea of the present invention.

First, in the plurality of examples described above, only the main body 21 is provided with the hook eye 4, and this hook eye 4 is provided with the hook H. However, the sub-body 22 may be provided with the hook eye 4 and the hook H.

Furthermore, a plurality of main bodies 21 and sub-bodies 22 coming in different shapes and colors are produced and are appropriately combined so that the minnow 1 can be adapted to fishing spot environments, weather, time and other conditions.

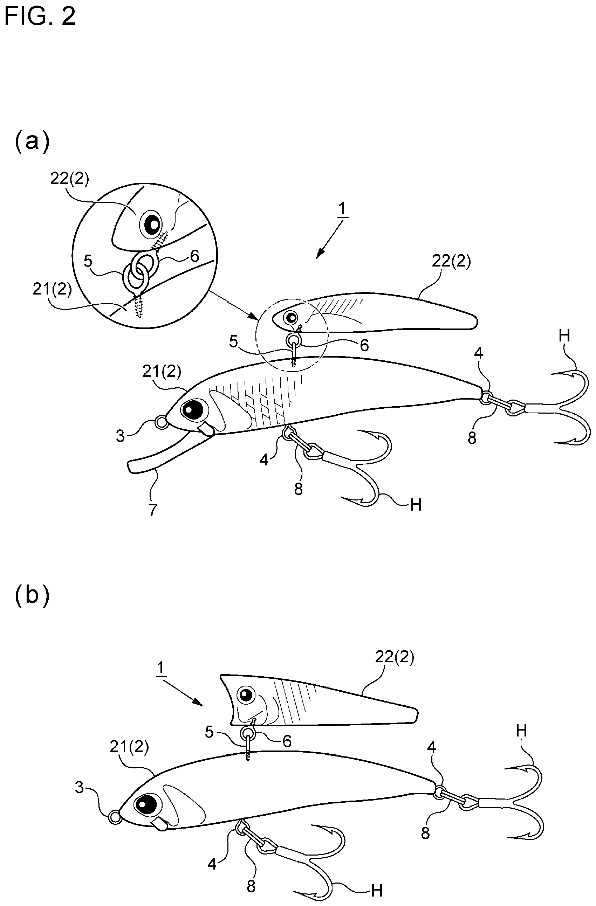

By way of an example, FIG. 2(b) shows the school of fish minnow 1 in which the main body 21 is of a lipless type and the sub-body 22 is of a popper type.

Furthermore, the school of fish minnow 1 according to the present invention is based on the assumption that the target fish attacks the main body 21, and in the above-mentioned plurality of examples, only the main body 21 is provided with the hook H, but the sub-body 22 may also be provided with the hook H.

Furthermore, in the plurality of examples described above, the structure of attaching the sub-body 22 to the main body 21 is in a mode in which one connecting eye 5 provided on the main body 21 and one connecting eye 6 provided near the head of the sub-body 22 are chained, but the present invention can also adopt a mode in which the connecting eyes 5 and 6 may be provided at a plurality of locations and be connected to each other.

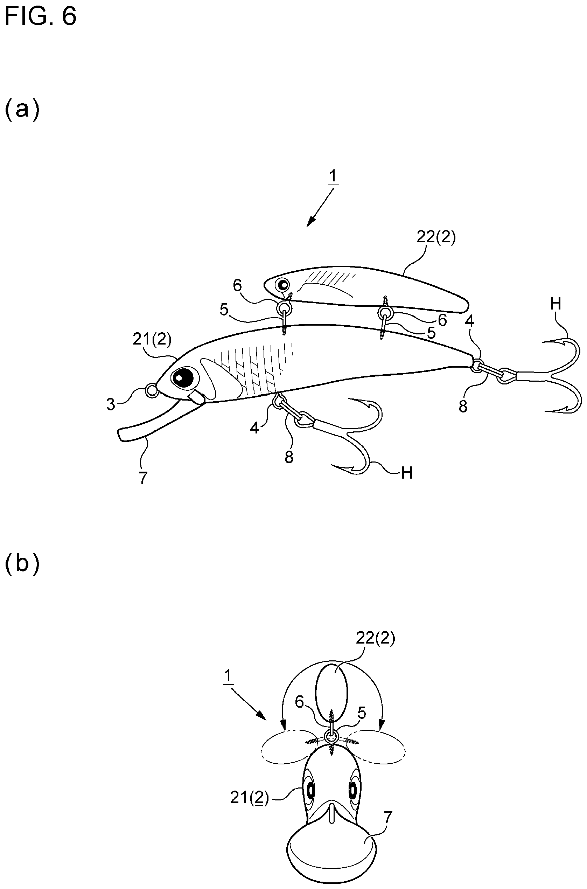

Specifically, by way of an example, as shown in FIG. 6, the connecting eyes 5 may be provided at two locations on the dorsal region of the main body 21, whereas the connecting eyes 6 may be provided at two locations on the ventral region of the sub-body 22, and these connecting eyes 5 and 6 may be chained.

In this case, as shown in FIG. 6(b), the movement of the sub-body 22 is allowed only within the rolling range, but is restricted within the yawing range and the pitching range so that it may move only in an extremely limited range corresponding to the allowance of the chained connecting eyes 5 and 6.

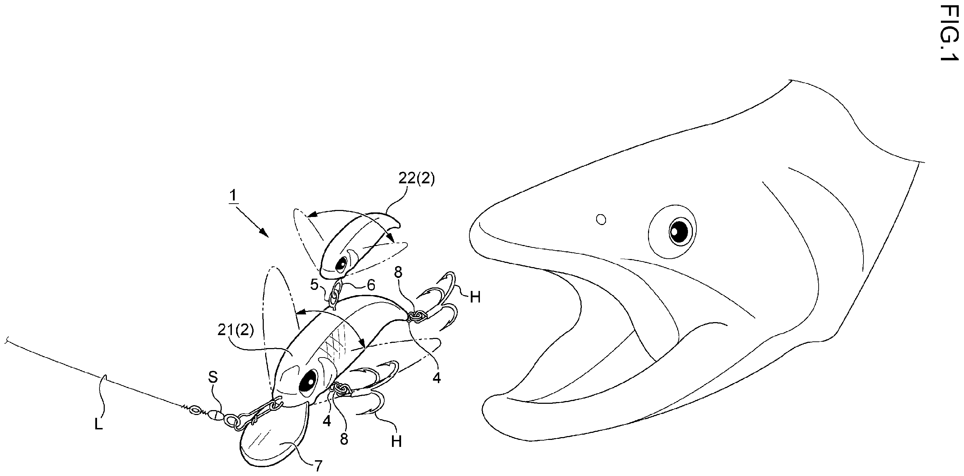

In the case of the school of fish minnow 1 in this mode, the movement of the sub-body 22 is significantly restricted within the yawing and pitching ranges, so that the air resistance received during flight by casting a rod and the fluttering of the sub-body 22 are reduced and the flight distance can be increased as compared with the mode of the school of fish minnow 1 shown in FIGS. 1 to 5.

### Reference Signs List

- 1: School of fish minnow
- 2: Body
- 21: Main body
- 22: Sub-body
- 3: Line eye
- 4: Hook eye
- 5: Connecting eye
- 6: Connecting eye
- 7: Lip
- 8: Split ring
- A: Arm
- B: Rotary blade
- D: Head
- F: Connecting metal fitting
- H: Hook
- K: Skirt
- L: line
- S: Swivel

## Claims

1. A school of fish minnow **characterized in** being a lure that comprises a body resembling the shape of a small fish and provided with a line eye for connecting a line, a hook eye and a hook connected to the hook eye, and provides the body with the same movement as that of small fish in water when the line connected to the line eye is pulled,
wherein the body provided with the line eye is a main body, and a sub-body resembling the shape of a fish smaller than the main body is attached to the main body.

2. The school of fish minnow according to claim 1,
wherein the structure of attaching the sub-body to the main body moderately restricts the movement of the sub-body, and is configured such that the movement of the sub-body causes the movement of the main body to change when the line is pulled.

3. The school of fish minnow according to claim 1 or 2,
wherein the main body is of a floating type.

4. The school of fish minnow according to claim 1 or 2,
wherein the main body is of a suspend type or a sinking type.

5. The school of fish minnow according to claim 3 or 4,
wherein the sub-body is attached to the dorsal side of the main body and is of a floating type.

6. The school of fish minnow according to claim 3 or 4,
wherein the sub-body is attached to the ventral side of the main body and is of a suspend type or a sinking type.

7. The school of fish minnow according to any one of claims 1, 2, 3, 4, 5 or 6,
wherein the weight ratio of the main body to the sub-body is 3 to 8: 1.
